# DEMANDE DE BREVET EUROPEEN

(11) **EP 1 424 358 A1**
(43) Date de publication de la demande: **02.06.2004**
(21) Numéro de dépôt: 03292970.5
(22) Date de dépôt: 28.11.2003
(51) Int. Cl.: C08L 23/10, C08K 3/22, C08K 3/00

(54) **Composition à base de polypropylène pour matière plastique résistant au feu**

(30) Priorité: 29.11.2002 FR 0215102
(71) Demandeur: Moraine, Gérard, 78140 Vélizy-Villacoublay (FR)
(72) Inventeur: Moraine, Gérard, 78140 Vélizy-Villacoublay (FR)
(74) Mandataire: Célanie, Christian

(57) **Abrégé**

L'invention concerne une composition à base de polypropylène pour matière plastique résistant au feu.

Elle comprend 80,5 à 90,5% en masse de polypropylène, 5 à 15% en masse d'un retardateur de flamme représenté par une composition à base de trioxyde d'antimoine et d'un halogène tel le brome, 0,5 à 4% d'un premier additif constitué par du polypropylène renfermant un composé anti-ultraviolet et un mélange de pigments, et 4 à 10% d'un second additif à base de composés de silicone augmentant la résistance au feu. Le polypropylène est un copolymère constitué de blocs de polypropylène ayant une masse spécifique de l'ordre de 900 kg/m3 et une dureté Shore de l'ordre de 60.

Application à la fabrication de pièces extrudées-soufflées.

## Description

Le secteur technique de la présente invention est celui des matières plastiques destinées à la fabrication d'articles par extrusion-soufflage.

Le besoin de disposer d'articles en matière plastique présentant une bonne résistance au feu se fait de plus en plus sentir car ces matières plastiques occupent une place croissante dans de nombreux domaines. L'un de ces domaines est celui du mobilier où on utilise abondamment des composants plastiques pour des raisons d'ergonomie, de design, de coût, etc...

De nombreux documents décrivent des compositions à base de matière plastique ayant de bonnes propriétés anti-feu. A titre d'exemple, on peut citer le brevet JP-10017733 qui décrit une résine à base de polymère de polypropylène incorporant un additif minéral résistant à la chaleur et au feu. Mais dans la plupart des cas, il s'agit de polymères spécifiques dont la composition est bien définie, mais inutilisable en extrusion-souffage et dont le prix de vente est très élevé. Ce type de produit ne peut pas être appliqué dans des domaines comme l'ameublement où le coût d'approvisionnement de la matière est élevé, ce qui grève le prix de l'article final.

Le bon comportement au feu de ces composants est un facteur de choix essentiel en raison des problèmes liés à la sécurité en cas d'incendie. Dans le secteur du mobilier intérieur ou extérieur et collectif ou individuel, on fait référence aux normes existant dans le bâtiment en ce qui concerne le comportement au feu. Le classement dit M correspond à la réaction au feu et on caractérise ainsi la propagation des flammes et l'aptitude à engendrer des gouttes enflammées et le classement dit F caractérise l'opacité des fumées et la toxicité des gaz produits.

Le besoin de disposer d'une composition polymère apte à être utilisée dans le domaine de l'ameublement et possédant un classement anti-feu représente une priorité pour les industriels de ce secteur.

Le but de la présente invention est de fournir une composition à base polypropylène apte à la fabrication de pièces extrudées-soufflées et destinées par exemple à l'ameublement.

L'invention a donc pour objet une composition à base de polypropylène pour matière plastique destiné à la fabrication de pièces par extrusion-soufflage résistant au feu, caractérisée en ce qu'elle comprend :
- 80,5 à 90,5% en masse de polypropylène,
- 5 à 15% en masse d'un retardateur de flamme représenté par une composition à base de trioxyde d'antimoine et d'un halogène tel le brome,
- 0,5 à 4% d'un premier additif constitué par du polypropylène renfermant un composé anti-ultraviolet et un mélange de pigments, et
- 4 à 10% d'un second additif à base de composés de silicone augmentant la résistance au feu.

Selon une caractéristique de l'invention, le polypropylène est un copolymère, ayant une masse spécifique de l'ordre de 900 kg/m3 et une dureté Shore de l'ordre de 60.

Selon une autre caractéristique de l'invention, le retardateur de flamme est une composition à base de trioxyde d'antimoine et de brome.

Selon encore une autre caractéristique de l'invention, le premier additif est constitué par une base polypropylène renfermant un composé anti-ultraviolet, un mélange de pigments et un adjuvant (désigné par le vocable anglais aidprocessing).

Selon une autre caractéristique de l'invention, le second additif est un composé permettant d'augmenter la résistance du mélange au feu.

Selon une autre caractéristique de l'invention, la composition comporte 82% en masse de polypropylène, 8 % en masse de retardateur de flamme MAXITHEN PP75, 2% en masse du premier additif MAXITHEN PP59107, et 8% en masse du second additif Dow 4-7081.

Selon une autre caractéristique de l'invention, la composition comporte 88% en masse de polypropylène, 5% en masse de retardateur de flamme EB42-80, 2% en masse du premier additif MAXITHEN PP59107, et 5% en masse du second additif Dow 4-7081.

Selon une autre caractéristique de l'invention, la composition comporte 88% en masse de polypropylène, 5% en masse de retardateur de flamme EB42-81, 2% en masse du premier additif MAXITHEN PP59107, et 5% en masse du second additif Dow 4-7081.

Selon une autre caractéristique de l'invention, la composition comporte 88% en masse de polypropylène, 5% en masse de retardateur de flamme MAXITHEN PP75, 2% en masse du premier additif MAXITHEN PP59107, et 5% en masse du second additif Dow 4-7081.

Selon une autre caractéristique de l'invention, la composition comporte 85% en masse de polypropylène, 8% en masse de retardateur de flamme MAXITHEN PP75, 2% en masse du premier additif MAXITHEN PP59107 et 5% en masse du second additif Dow 4-7081.

Selon une autre caractéristique de l'invention, la composition comporte 85% en masse de polypropylène, 8% en masse de retardateur de flamme MAXITHEN 75940 FR, 2% en masse du premier additif MAXITHEN PP62593 et 5% en masse du second additif Dow 4-7081.

Selon une autre caractéristique de l'invention, la composition comporte 85% en masse de polypropylène, 8% en masse de retardateur de flamme MAXITHEN 75940, 2% en masse du premier additif MAXITHEN PPSYS 75650, et 5% en masse du second additif Dow 4-7081.

Le premier avantage de la présente invention réside en ce que les pièces réalisées avec la composition, de matière plastique présentent une grande capacité de résistance au feu.

Un autre avantage réside dans le fait que la mise en oeuvre des compositions selon l'invention ne nécessite pas d'adaptation particulière du procédé d'extrusion-soufflage.

Un autre avantage réside dans le fait qu'il n'y a pas de baisse significative des propriétés mécaniques et de la tenue chimique des pièces fabriquées et qu'aucune odeur ne se dégage et aucune dégradation en recyclage.

D'autres caractéristiques, détails et avantages de l'invention ressortiront plus clairement de la description donnée ci-après à titre indicatif.

Comme indiqué précédemment, on ne pouvait pas jusqu'ici utiliser les polymères de polypropylène du commerce pour fabriquer des pièces par extrusion-soufflage présentant des bonnes propriétés de résistance au feu.

L'invention apporte un progrès technique important car elle permet pour la première fois d'utiliser des polymères polypropylène du commerce pour fabriquer des pièces par extrusion-soufflage ayant des propriétés anti-feu excellentes. Pour préparer une composition faite d'un mélange des composés indiqués précédemment, apte à être traitée par extrusion-soufflage, on utilise des produits du commerce.

Ainsi, le copolymère de polypropylène peut être le produit vendu par la société BOREALIS sous la désignation BA202E. Ce polymère présente une masse spécifique de 901 kg/m³, un module de flexion de 1300 MPa et une dureté Shore de 60.

De façon générale, le copolymère de polypropylène utilisé dans l'invention présente un indice de fluidité de 0,3g/10mm à 230°C/2,16Kg selon la norme ISO 1133.

Plusieurs produits peuvent être utilisés comme retardateur de flamme. Il peut s'agir du produit vendu par la société GABRIEL-CHEMIE sous la désignation MAXITHEN PP 75200 FR, ou MAXITHEN PPSYS 75650 UVFR, MAXITHEN PP 75940 FR, qui se présentent sous la forme de granulés blancs. Il s'agit d'une composition à base de trioxyde d'antimoine et d'un halogène tel le brome. On peut encore utiliser les produits équivalents vendus par la société CIBA sous la désignation EB42-80 FF ou EB42-81 FF.

Le premier additif est constitué par l'un des produits vendus par la société GABRIEL-CHEMIE sous la désignation MAXITHEN PP91203UV, ou MAXITHEN PP625937UV, ou MAXITHEN PP59107/20UV, ou MAXITHEN PPSYS529197. Ces additifs sont constitués par du polypropylène renfermant un composé anti-ultraviolet et un mélange de pigments comme colorant classique utilisé dans l'industrie des matières plastiques et un adjuvant. Ce dernier terme désigne les produits utilisés couramment au cours de l'extrusion-soufflage pour faciliter l'opération. Ce produit est vendu sous forme de boulettes.

Le second additif augmentant la résistance au feu est le produit vendu par la société DOW CORNING EUROPE par exemple sous la désignation DOW CORNING 4-7081. Cet additif est constitué de composés de silicone et est vendu sous forme de poudre blanche, de densité 1,2. Le rôle de ce composé est d'augmenter la résistance au feu.

De façon surprenante, il a été découvert qu'en adoptant les proportions indiquées des composés décrits ci-dessus, on obtenait un article extrudé-soufflé présentant des caractéristiques tout à fait remarquables quant à la résistance au feu. Les résultats obtenus sont explicités ci-après. Les fourchettes des proportions des composés sont donc nécessaires à l'obtention du résultat annoncé.

### Exemple 1

On prépare une composition par mélange des poudres selon les pourcentages suivants que l'on introduit dans un mélangeur que l'on fait tourner pendant quelques heures:
- 82% en masse de polypropylène,
- 8 % en masse de retardateur de flamme MAXITHEN PP75,
- 2% en masse du premier additif MAXITHEN PP59107,
- 8% en masse du second additif Dow 4-7081.

Ces composés sont mélangés de manière intime pour obtenir un produit homogène. Ce produit est ensuite mis en oeuvre par extrusion-soufflage selon le processus suivant :
- presse extrusion-soufflage à tête d'accumulation,
- vis à profil « thpm » sans taux de compression et avec module de cisaillement MADDOCK,
- profil de température vis θ de 180 à 190 °C,
- vitesse de rotation périphérique limitée à 0,2 m/s,
- durée de cycle inférieure ou égale à 3 mn.

On prépare de la même manière les compositions suivantes.

### Exemple 2

- 88% en masse de polypropylène,
- 5% en masse de retardateur de flamme EB42-80,
- 2% en masse du premier additif MAXITHEN PP59107,
- 5% en masse du second additif Dow 4-7081.

### Exemple 3

- 88% en masse de polypropylène,
- 5% en masse de retardateur de flamme EB42-81
- 2% en masse du premier additif MAXITHEN PP59107,
- 5% en masse du second additif Dow 4-7081.

### Exemple 4

- 88% en masse de polypropylène,
- 5% en masse de retardateur de flamme MAXITHEN PP75,
- 2% en masse du premier additif MAXITHEN PP59107,
- 5% en masse du second additif Dow 4-7081.

### Exemple 5

- 85% en masse de polypropylène,
- 8% en masse de retardateur de flamme MAXITHEN PP75,
- 2% en masse du premier additif MAXITHEN PP59107,
- 5% en masse du second additif Dow 4-7081.

### Exemple 6

- 85% en masse de polypropylène,
- 8% en masse de retardateur de flamme MAXITHEN 75940 FR,
- 2% en masse du premier additif MAXITHEN PP62593,
- 5% en masse du second additif Dow 4-7081.

### Exemple 7

- 85% en masse de polypropylène,
- 8% en masse de retardateur de flamme MAXITHEN 75940,
- 2% en masse du premier additif MAXITHEN PPSYS 75650,
- 5% en masse du second additif Dow 4-7081.

Dans les compositions indiquées, on utilise indifféremment les composés indiqués.

On prépare des échantillons par extrusion-soufflage à l'aide des compositions ci-dessus pour déterminer leur résistance au feu selon la norme française NFP 92-505 et leur indice de fumée selon la norme française NF X 70-100 & STM-S-001.

Pour la résistance au feu, on soumet les échantillons préparés à l'action d'une source de chaleur rayonnante et on provoque éventuellement l'inflammation des gaz dégagés et la propagation des gaz émis. On note que la face exposée s'enflamme au bout d'une durée comprise entre 1mn43 et 2mn15. La longueur maximale de flamme est comprise entre 25 et 30 cm.

On effectue l'essai complémentaire suivant, dit essai de goutte, en utilisant un épiradiateur en position horizontale à 30 mm au-dessus de la plaque, surface rayonnante vers le bas. On observe l'inflammation des gaz dégagés et la chute de gouttes enflammées. La chute de matière fondue s'effectuer au bout d'un temps de l'ordre de 1mn45s à 3mn2s. Le matériau s'enflamme et le résidu est constitué de matériau fondu.

Les résultats de la réaction au feu confèrent au produit selon l'invention un classement M2, selon la norme pour l'analyse des gaz de pyrolyse et de combustion et la norme française NF X 10-702 & STM-S-001. Pour la détermination de l'indice de fumée, on obtient les résultats suivants:
I.T.C : 13,7
Dm : 334
VOF4 : 376
Indice de fumée : 23.

Ces résultats confèrent aux produits extrudés-soufflés préparés selon l'invention un classement dit F2, ce qui représente un niveau très élevé de performance.

On effectue des analyses de pyrolyse et de combustion.

On obtient les résultats suivants:
Monoxyde de carbone CO : 99,2 mg,
Dioxyde de carbone CO₂ : 446,6 mg,
Acide cyanhydrique : non décelé,
Acides halogénés HCl et HF : non décelés,
Acide halogéné HBr : 12,8 mg,
Dioxyde de soufre : non décelé.

L'indice de toxicité conventionnel ITC est de 13,7.

On mesure la densité optique spécifique de la fumée émise par la combustion ou pyrolyse des matériaux solides. Pour cela, on procède selon un mode sans flamme (essai 1) et avec flamme (essais 2-4). On mesure le temps en seconde pour atteindre la densité optique maximale (Dm), la densité optique spécifique maximale (Dsm) et la valeur d'obscurcissement dû à la fumée au terme des quatre premières minutes de l'essai et obtient les résultats suivants.

Caractéristiques Essai 1 Essai 2 Essai 3 Essai 4

| | | | | |
|---|---|---|---|---|
| Dm | 1193 | 498 | 363 | 431 |
| Dsm | 251 | 395 | 294 | 314 |
| VOF4 | 54 | 378 | 392 | 359 |

On obtient une moyenne Dsm de 334 s et VOF4 de 376.

Ainsi, la composition de matière plastique selon l'invention permet de préparer des pièces extrudées qui présentent d'excellentes propriétés anti-feu, ce qui leur confère officiellement le classement M2F2 tout en utilisant des composés du commerce.

## Revendications

1. Composition à base de polypropylène pour matière plastique résistant au feu, **caractérisée en ce qu'**elle comprend :
- 80,5 à 90,5% en masse de polypropylène,
- 5 à 15% en masse d'un retardateur de flamme représenté par une composition à base de trioxyde d'antimoine et d'un halogène tel le brome,
- 0,5 à 4% d'un premier additif constitué par du polypropylène renfermant un composé anti-ultraviolet et un mélange de pigments, et
- 4 à 10% d'un second additif à base de composés de silicone augmentant la résistance au feu.

2. Composition à base de polypropylène pour matière plastique résistant au feu selon la revendication 1, **caractérisée en ce qu'**elle comprend:
- 82% en masse de polypropylène,
- 8 % en masse de retardateur de flamme MAXITHEN PP75,
- 2% en masse du premier additif MAXITHEN PP59107,
- 8% en masse du second additif Dow 4-7081.

3. Composition à base de polypropylène pour matière plastique résistant au feu, **caractérisée en ce qu'**elle comprend :
- 88% en masse de polypropylène,
- 5% en masse de retardateur de flamme EB42-80,
- 2% en masse du premier additif MAXITHEN PP59107,
- 5% en masse du second additif Dow 4-7081.

4. Composition à base de polypropylène pour matière plastique résistant au feu, **caractérisée en ce qu'**elle comprend :
- 88% en masse de polypropylène,
- 5% en masse de retardateur de flamme EB42-81
- 2% en masse du premier additif MAXITHEN PP59107,
- 5% en masse du second additif Dow 4-7081.

5. Composition à base de polypropylène pour matière plastique résistant au feu, **caractérisée en ce qu'**elle comprend :
- 88% en masse de polypropylène,
- 5% en masse de retardateur de flamme MAXITHEN PP75,
- 2% en masse du premier additif MAXITHEN PP59107,
- 5% en masse du second additif Dow 4-7081.

6. Composition à base de polypropylène pour matière plastique résistant au feu, **caractérisée en ce qu'**elle comprend :
- 85% en masse de polypropylène,
- 8% en masse de retardateur de flamme MAXITHEN PP75,
- 2% en masse du premier additif MAXITHEN PP59107,
- 5% en masse du second additif Dow 4-7081.

7. Composition à base de polypropylène pour matière plastique résistant au feu selon la revendication 1,
**caractérisée en ce qu'**elle comprend:
- 85% en masse de polypropylène,
- 8% en masse de retardateur de flamme MAXITHEN 75940 FR,
- 2% en masse du premier additif MAXITHEN PP62593,
- 5% en masse du second additif Dow 4-7081.

8. Composition à base de polypropylène pour matière plastique résistant au feu, **caractérisée en ce qu'**elle comprend :
- 85% en masse de polypropylène,
- 8% en masse de retardateur de flamme MAXITHEN 75940,
- 2% en masse du premier additif MAXITHEN PPSYS 75650,
- 5% en masse du second additif Dow 4-7081.
